# EUROPEAN PATENT APPLICATION

(11) **EP 4 122 653 A1**
(43) Date of publication of application: **25.01.2023**
(21) Application number: 22185713.9
(22) Date of filing: 19.07.2022
(51) Int. Cl.: B25J 9/10, B25J 9/12, B25J 13/08, B25J 19/02, B25J 17/02, B25J 17/00

(54) **JOINT ACTUATOR OF ROBOT**

(30) Priority: 21.07.2021 CN 202110822909
(71) Applicant: Coretronic Corporation, Hsin-Chu 300 (TW)
(72) Inventor: LIU, KUANG-YAO, Hsin-Chu (TW); CHANG, MING- JU, Hsin-Chu (TW); CHANG, YUNG-YU, Hsin-Chu (TW); HSIEH, CHI-TANG, Hsin-Chu (TW)
(74) Representative: Ter Meer Steinmeister & Partner

(57) **Abstract**

A joint actuator of a robot including a driving device, a driving shaft, a reducer, a torsion sensor, and a dual encoder is provided. The driving shaft is connected to the driving device. The driving device is configured to drive the driving shaft to rotate. The reducer includes a motive power input component and a motive power output component. The motive power input component and the motive power output component are sleeved on the driving shaft. The motive power input component is disposed between the driving shaft and the motive power output component. The torsion sensor is connected to the motive power output component of the reducer. The dual encoder is connected to the driving device and the driving shaft. The driving device is located between the dual encoder and the reducer.

## Description

### BACKGROUND

### Technical Field

The disclosure relates to a joint actuator. Particularly, the disclosure relates to a joint actuator of a robot.

### Description of Related Art

Industrial robots may be used to not only overcome the impact of harsh environments on production and reduce the use of manpower, but also increase production efficiency, thereby ensuring product quality. With the continuous development of industrial robot technology, the industrial robot is able to carry heavy objects, and also performs various intellectualized high-precision tasks, such as welding, precision assembly, grinding, door opening, and other actions. However, in a conventional robot arm, since a joint actuator is not equipped with a torsion sensor, the robot arm cannot perform such high-precision tasks. Currently, in some robot arms, although the joint actuator is equipped with a torsion sensor, the structural design for connection between the torsion sensor and a reducer disposed inside the joint actuator of the robot arm is a relatively complicated, increasing the costs of the device. In addition, with force sensing at the output end by the torsion sensor alone, the robot arm is not able to accurately perform collision detection and reaction or compliant control.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

It is an object of the present disclosure to provide a joint actuator of a robot, which accurately performs high-precision actions, and/or in which a structural design for connection between a torsion sensor and a reducer is relatively simplified.

The object is solved by the features of the independent claim. Preferred embodiments are given in the dependent claims.

The joint actuator of the robot the disclosure includes a driving device, a driving shaft, a reducer, a torsion sensor, and a dual encoder. The driving shaft is connected to the driving device. The driving device is configured to drive the driving shaft to rotate. The reducer includes a motive power input component and a motive power output component. The motive power input component and the motive power output component are sleeved on the driving shaft. The motive power input component is disposed between the driving shaft and the motive power output component. The torsion sensor is connected to the motive power output component of the reducer. The dual encoder is connected to the driving device and the driving shaft. The driving device is located between the dual encoder and the reducer.

In one or more embodiments, the motive power input component may be a hat-shaped flex spline.

In one or more embodiments, the motive power output component may be a circular spline.

In one or more embodiments, the joint actuator may comprise at least one locking element.

In one or more embodiments, the at least one locking element may lock the torsion sensor on the motive power output component.

In one or more embodiments, the torsion sensor may be integrally formed with and connected to the motive power output component.

In one or more embodiments, the dual encoder may comprise an input module and an output module.

In one or more embodiments, the driving shaft may comprise an input shaft and an output shaft.

In one or more embodiments, the input module may be connected to and may rotate synchronously with the input shaft.

In one or more embodiments, the output module may be connected to and may rotate synchronously with the output shaft.

In one or more embodiments, the input module and the output module may be coaxially disposed.

In one or more embodiments, the input module may comprise an input disk and an input rotator.

In one or more embodiments, the output module may comprise an output disk and an output rotator.

In one or more embodiments, the input disk may be fixed on the input rotator

In one or more embodiments, the input rotator may be locked on the input shaft

In one or more embodiments, the output disk may be fixed on the output rotator.

In one or more embodiments, the output rotator may be locked on the output shaft.

In one or more embodiments, the dual encoder may comprise a circuit board, an input sensor, and an output sensor.

In one or more embodiments, the input sensor and the output sensor may be disposed on the circuit board.

In one or more embodiments, the input sensor may correspond to the input disk fixed on the input rotator.

In one or more embodiments, the output sensor may correspond to the output disk fixed on the output rotator.

In one or more embodiments, the input disk and the output disk may be coplanarly disposed.

In one or more embodiments, the joint actuator may comprise a driving circuit board.

In one or more embodiments, the driving circuit board may be electrically coupled to the torsion sensor and the dual encoder to receive a sensing signal of the torsion sensor.

In one or more embodiments, the input sensor and the output sensor may be coplanarly disposed.

In one or more embodiments, the circuit board may be electrically coupled to the driving circuit board.

In one or more embodiments, the input sensor and the output sensor may be each configured to provide a sensing signal to the circuit board.

In one or more embodiments, the circuit board may provide the sensing signal to the driving circuit board.

In one or more embodiments, the joint actuator may comprise a lock assembly.

In one or more embodiments, the lock assembly may correspond to the driving shaft and in response to a stop of the driving device, the lock assembly may lock the driving shaft.

In one or more embodiments, the torsion sensor may be connected to a robot arm of the robot through a connector.

In one or more embodiments, the driving device may be a frameless motor.

In one or more embodiments, the joint actuator may comprise a housing.

In one or more embodiments, the driving device, the driving shaft, the reducer, the torsion sensor, and the dual encoder may be contained in the housing.

Based on the foregoing, in the joint actuator of the robot of the disclosure, not only force is sensed at the output end of the joint actuator with the torsion sensor, but displacement at the input end and at the output end of the joint actuator is also sensed with the dual encoder. Moreover, the dual encoder and the torsion sensor are coupled to each other for a displacement sensing signal and a torsion sensing signal to be integrated to accurately determine a stressed state of the robot. Accordingly, corresponding high-precision actions can be performed accurately. Furthermore, the torsion sensor is connected to the motive power output component located at the output end, instead of being connected to the internal motive power input component. Therefore, the structural design for connection between the torsion sensor and the reducer can be relatively simplified.

Other objectives, features and advantages of the present invention will be further understood from the further technological features disclosed by the embodiments of the present invention wherein there are shown and described preferred embodiments of this invention, simply by way of illustration of modes best suited to carry out the invention.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 cross-sectional view of a joint actuator of a robot of to an embodiment of the disclosure.
FIG. 2A and FIG. 2B are each an exploded view of the joint actuator of the robot of FIG. 1.
FIG. 3A is a side view of an input module of the dual encoder of FIG. 1.
FIG. 3B is a perspective side view of the input module of the dual encoder of FIG. 1.
FIG. 3C is a side view of an output module of the dual encoder of FIG. 1.
FIG. 3D is a perspective view of the output module of the dual encoder of FIG. 1.
FIG. 4 is a cross-sectional view of the dual encoder of FIG. 1.
FIG. 5 shows the torsion sensor of FIG. 1 being connected to a robot arm.
FIG.6 cross-sectional view of a joint actuator of a robot of another embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

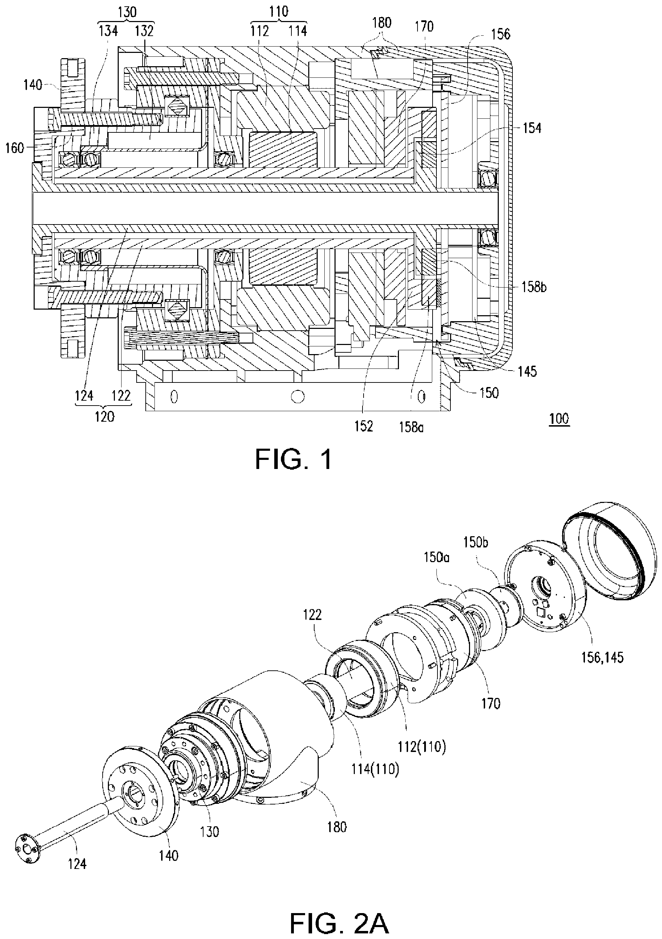

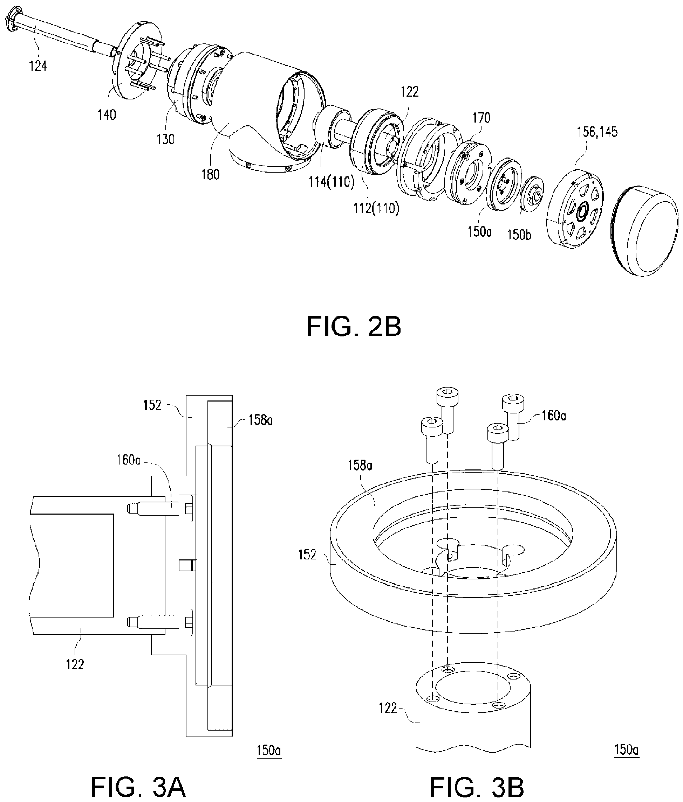

FIG. 1 is a cross-sectional view of a joint actuator of a robot according to an embodiment of the disclosure. FIG. 2A and FIG. 2B are each an exploded view of the joint actuator of the robot of FIG. 1. With reference to FIG. 1, FIG. 2A, and FIG. 2B, a joint actuator 100 of this embodiment includes a driving device 110, a driving shaft 120, a reducer 130, and a housing 180. The driving device 110, the driving shaft 120, and the reducer 130 are at least partially contained in the housing 180. The driving shaft 120 is connected to the driving device 110. The driving device 110 is, for example, a frameless motor and is configured to drive the driving shaft 120 to rotate. The driving device 110 includes a coil 112 and a rotor 114 sleeved on the driving shaft 120. The rotor 114 is disposed inside the coil 112, that is, located between the driving shaft 120 and the coil 112.

The reducer 130 includes a motive power input component 132 and a motive power output component 134. The motive power input component 132 is, for example, a hat-shaped flex spline, and the motive power output component 134 is, for example, a circular spline. The motive power input component 132 and the motive power output component 134 are both sleeved on the driving shaft 120, and the motive power input component 132 is disposed between the driving shaft 120 and the motive power output component 134. To be specific, the motive power output component 134 is disposed around the motive power input component 132, and the motive power input component 132 is disposed around the driving shaft 120. The driving shaft 120 may be decelerated by a reduction ratio between the motive power input component 132 and the motive power output component 134. For the specific structural design of the reducer 130 related to achieving the reduction ratio, reference may be made to the conventional art, which will not be repeatedly described herein.

In this embodiment, the joint actuator 100 also includes a driving circuit board 145, a torsion sensor 140, and a dual encoder 150. The driving circuit board 145, the torsion sensor 140, and the dual encoder 150 are at least partially contained in the housing 180. The torsion sensor 140 is connected to the motive power output component 134 of the reducer 130. The torsion sensor 140 and the dual encoder 150 are electrically coupled to the driving circuit board 145. The dual encoder 150 is connected to the driving shaft 120. The driving device 110 is located between the dual encoder 150 and the reducer 130 along a shaft axis which is parallel to the driving shaft 120. The dual encoder 150 is located between the driving device 110 and the driving circuit board 145 along the shaft axis. The torsion sensor 140 and the dual encoder 150 are electrically coupled to the driving circuit board 145. Accordingly, in the joint actuator 100 of this embodiment, not only force can be sensed at the output end of the joint actuator 100 with the torsion sensor 140, but displacement at the input end and at the output end of the joint actuator 100 can also be sensed with the dual encoder 150. Moreover, a displacement sensing signal of the dual encoder 150 and a torsion sensing signal of the torsion sensor 140 are each transmitted to the driving circuit board 145, and the driving circuit board 145 may integrate the sensing signals to accurately determine a stressed state of the robot. Accordingly, corresponding high-precision actions can be performed accurately.

In addition, in this embodiment, since the torsion sensor 140 is connected to the motive power output component 134 located at the output end of the joint actuator 100 as described above, instead of being connected to the internal motive power input component 132, the structural design for connection between the torsion sensor 140 and the reducer 130 can be relatively simplified. Specifically, the joint actuator 100 also includes at least one locking element 160 (a plurality of locking elements being shown). The locking element 160 fastens the torsion sensor 140 on the motive power output component 134 of the reducer 130.

In this embodiment, the dual encoder 150 includes an input rotator 152 and an output rotator 154 coaxially disposed. The driving shaft 120 is connected to two rotators 152, 154 to coaxially rotate. To be specific, the driving shaft 120 includes an input shaft 122 and an output shaft 124 coaxially disposed. The input shaft 122 is disposed outside around the output shaft 124. The input shaft 122 is sleeved on the output shaft 124. One end of the input shaft 122 is connected to the motive power input component 132 of the reducer 130 and the other end is connected to the input rotator 152. The rotor 114 of the driving device 110 is connected to the input shaft 122 to drive the input shaft 122 to rotate. One end of the output shaft 124 is connected to the torsion sensor 140 and the other end is connected to the output rotator 154. The torsion sensor 140 is connected to the motive power output component 134 (a circular spline, for example) of the reducer 130.

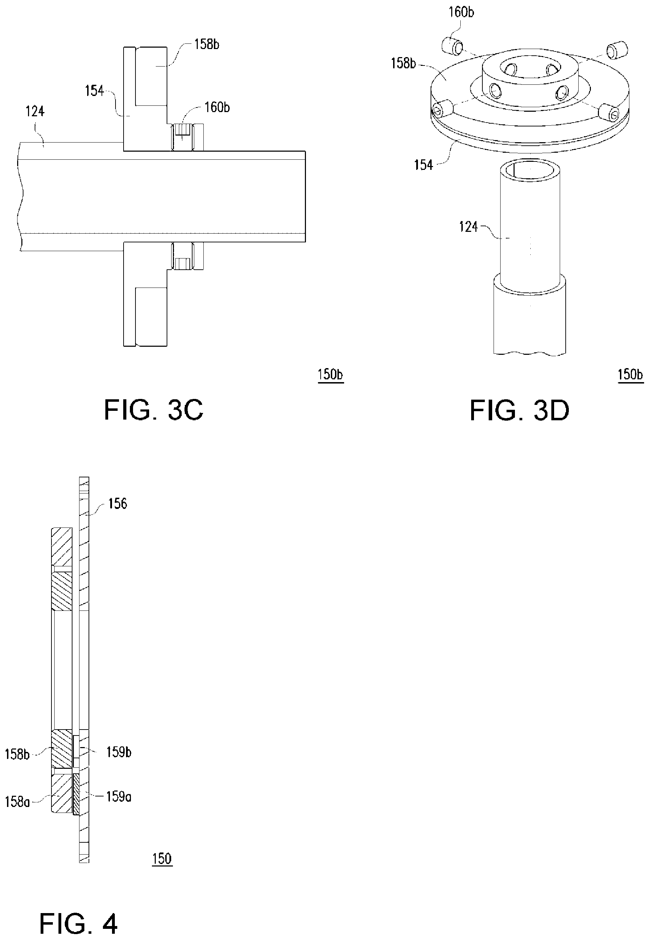

FIG. 3A is a side view of an input module of the dual encoder of FIG. 1. FIG. 3B is a perspective side view of the input module of the dual encoder of FIG. 1. FIG. 3C is a side view of an output module of the dual encoder of FIG. 1. FIG. 3D is a perspective view of the output module of the dual encoder of FIG. 1. FIG. 4 is a cross-sectional view of the dual encoder of FIG. 1. With reference to FIG. 3A, FIG. 3B, FIG. 3C, FIG. 3D, and FIG. 4, the dual encoder 150 also includes a circuit board 156, an input module 150a, an output module 150b, an input sensor 159a, and an output sensor 159b. The input module 150a includes an input disk 158a and the input rotator 152, wherein the input disk 158a is a magnetic disk. The input disk 158a is glued or fixed to the input rotator 152, and the input rotator 152 in turn is locked on the input shaft 122 through at least one locking element 160a. The output module 150b includes an output disk 158b and the output rotator 154, wherein the output disk 158b is a magnetic disk. The output disk 158b is glued or fixed to the output rotator 154, and the output rotator 154 in turn is locked on the output shaft 124 through at least one locking element 160b. The locking elements 160a, 160b may be screws, for example.

To be more specific, the input disk 158a is, for example, a ring-shaped input magnetic disk, and the output disk 158b is, for example, a ring-shaped output magnetic disk. The input disk 158a and the output disk 158b are respectively disposed on the input rotator 152 and the output rotator 154. The input sensor 159a is, for example, an input end magnetic sensing head, and the output sensor 159b is, for example, an output end magnetic sensing head. The input sensor 159a and the output sensor 159b are disposed on the circuit board 156. The input sensor 159a corresponds to the input disk 158a on the input rotator 152 at an interval, and the output sensor 159b corresponds to the output disk 158b on the output rotator 154 at an interval. The input sensor 159a and the output sensor 159b respectively sense the input disk 158a and the output disk 158b, and are configured to provide sensing signals respectively to the circuit board 156. Moreover, the circuit board 156 is electrically coupled to the driving circuit board 145, such that the dual encoder 150 may provide the sensing signals to the driving circuit board 145 through the circuit board 156.

Accordingly, the driving circuit board 145 may receive the signal related to a rotation displacement of the input disk 158a (corresponding to the input rotator 152, the input shaft 122, and the motive power input component 132, i.e., corresponding to the input end) from the input sensor 159a, the sensing signal related to a rotation displacement of the output disk 158b (corresponding to the output rotator 154, the output shaft 124, and the motive power output component 134, i.e., corresponding to the output end) from the output sensor 159b, and the sensing signal related to the torsion at the output end from the torsion sensor 140, and may accordingly integrate these signals to determine the stressed state at the output end of the joint actuator 100.

Further, in this embodiment, the input disk 158a and the output disk 158b are coplanarly and coaxially disposed, and the input sensor 159a and the output sensor 159b are coplanarly disposed on the circuit board 156. Accordingly, the two sensors 159a, 159b may be carried on one single circuit board 156, and the two sensors 159a, 159b may respectively correspond to the two disks 158a, 158b. Thereby, the size of the joint actuator 100 in a direction of the shaft axis can be reduced.

With reference to FIG. 1, in this embodiment, the joint actuator 100 also includes a lock assembly 170. The lock assembly 170 corresponds to the driving shaft 120. For example, the lock assembly 170 includes a brake pad (not shown) linked with the driving shaft 120. In response to a stop of the driving device 110, the brake pad of the lock assembly 170 is abutted and serves as a safety brake locking the driving shaft 120, preventing the driving shaft 120 from moving unexpectedly due to external forces. For the specific structural design of the lock assembly 170 for locking the driving shaft 120, reference may be made to the conventional art, which will not be repeatedly described herein. In this embodiment, the torsion sensor 140, the reducer 130, the driving device 110, the lock assembly 170, the dual encoder 150, and the driving circuit board 145 are sequentially disposed along the driving shaft 120.

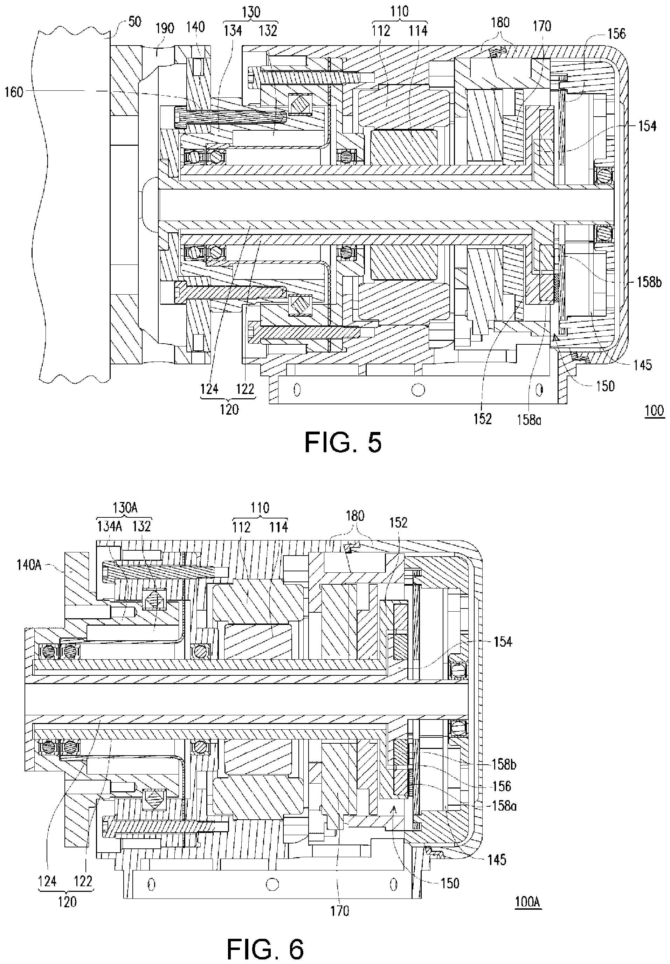

FIG. 5 shows the torsion sensor of FIG. 1 being connected to a robot arm. With reference to FIG. 5, in this embodiment, a robot arm 50 of the robot (showing a part of the robot arm 50 in FIG. 5) includes a connector 190. The torsion sensor 140 of the joint actuator 100 is connected to the robot arm 50 through the connector 190. The external force from the robot arm 50 is transmitted to the torsion sensor 140 through the connector 190. The torsion sensor 140 senses the torsion corresponding to the external force.

FIG. 6 is a cross-sectional view of a joint actuator of a robot according to another embodiment of the disclosure. The difference between a joint actuator 100A shown in FIG. 6 and the joint actuator 100 shown in FIG. 1 lies in the following. In the joint actuator 100A, a torsion sensor 140A and a motive power output component 134A of a reducer 130A are an integrally formed member, which can further simplify the structure of the joint actuator 100A, and reduce the overall volume.

In summary of the foregoing, in the joint actuator of the robot of the disclosure, not only force is sensed at the output end of the joint actuator with the torsion sensor, but displacement at the input end and at the output end of the joint actuator is also sensed with the dual encoder. Moreover, the dual encoder and the torsion sensor are coupled to the driving circuit board for the displacement sensing signal and the torsion sensing signal to be integrated to accurately determine the stressed state of the robot. Accordingly, corresponding high-precision actions can be performed accurately. Furthermore, the torsion sensor is connected to the motive power output component of the reducer disposed at the output end, instead of being connected to the internal motive power input component. Therefore, the structural design for connection between the torsion sensor and the reducer can be relatively simplified.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A joint actuator (100) of a robot, comprising:
a driving device (110);
a driving shaft (120) connected to the driving device (110), wherein the driving device (110) is configured to drive the driving shaft (120) to rotate;
a reducer (130) comprising a motive power input component (132) and a motive power output component (134), wherein the motive power input component (132) and the motive power output component (134) are sleeved on the driving shaft (120), and the motive power input component (132) is connected between the driving shaft (120) and the motive power output component (132);
a torsion sensor (140) connected to the motive power output component (134) of the reducer (130); and
a dual encoder (150) connected to the driving device (110) and the driving shaft (120), wherein the driving device (110) is located between the dual encoder (150) and the reducer (130).

2. The joint actuator of the robot according to claim 1, wherein the motive power input component (132) is a hat-shaped flex spline, and the motive power output component (134) is a circular spline.

3. The joint actuator of the robot according to claim 1 or 2, comprising at least one locking element (160), wherein the at least one locking element (160) is configured to lock the torsion sensor (140) on the motive power output component (134).

4. The joint actuator of the robot according to claim 1 or 2, wherein the torsion sensor (140A) is integrally formed with and connected to the motive power output component (134A).

5. The joint actuator of the robot according to any one of the preceding claims, wherein the dual encoder (150) comprises an input module (150a) and an output module (150b) and/or the driving shaft (120) comprises an input shaft (122) and an output shaft (124).

6. The joint actuator of the robot according to claim 5, wherein the input module (150a) is connected to and rotates synchronously with the input shaft (122), the output module (150b) is connected to and rotates synchronously with the output shaft (124), and/or the input module (150a) and the output module (150b) are coaxially disposed.

7. The joint actuator of the robot according to claim 5 or 6, wherein the input module (150a) comprises an input disk (158a) and an input rotator (152), and the output module (150b) comprises an output disk (158b) and an output rotator (154), wherein the input disk (158a) is fixed on the input rotator (152), the input rotator (158a) is locked on the input shaft (122), the output disk (158b) is fixed on the output rotator (154), and the output rotator (154) is locked on the output shaft (124).

8. The joint actuator of the robot according to claim 7, wherein the dual encoder (150) comprises a circuit board (156), an input sensor (159a), and an output sensor (159b), the input sensor (159a) and the output sensor (159b) are disposed on the circuit board (156), the input sensor (159a) corresponds to the input disk (158a) fixed on the input rotator (152), and the output sensor (159b) corresponds to the output disk (158b) fixed on the output rotator (154).

9. The joint actuator of the robot according to claim 7 or 8, wherein the input disk (158a) and the output disk (158b) are coplanarly disposed.

10. The joint actuator of the robot according to any one of the preceding claims, comprising a driving circuit board (145), wherein the driving circuit board (145) is electrically coupled to the torsion sensor (140) and the dual encoder (150) to receive a sensing signal of the torsion sensor (140).

11. The joint actuator of the robot according to claim 8, 9 or 10, wherein the input sensor (159a) and the output sensor (159b) are coplanarly disposed, and/or the circuit board (156) is electrically coupled to the driving circuit board (145), the input sensor (159a) and the output sensor (159b) are each configured to provide a sensing signal to the circuit board (156), and the circuit board (156) provides the sensing signal to the driving circuit board (145).

12. The joint actuator of the robot according to any one of the preceding claims, comprising a lock assembly (170), wherein the lock assembly (170) corresponds to the driving shaft (120), and in response to a stop of the driving device (110), the lock assembly (170) is configured to lock the driving shaft (120).

13. The joint actuator of the robot according to any one of the preceding claims, wherein the torsion sensor (140) is connected to a robot arm (50) of the robot through a connector (190).

14. The joint actuator of the robot according to any one of the preceding claims, wherein the driving device (110) is a frameless motor.

15. The joint actuator of the robot according to any one of the preceding claims, comprising a housing (180), wherein the driving device (110), the driving shaft (120), the reducer (130), the torsion sensor (140), and the dual encoder (150) are contained in the housing (180).
